# FASCICULE DE BREVET EUROPEEN

(11) **EP 1 344 975 B1**
(45) Date de publication et mention de la délivrance du brevet: **02.07.2008**
(21) Numéro de dépôt: 02290615.0
(22) Date de dépôt: 12.03.2002
(51) Int. Cl.: F21V 5/00, F21S 8/10

(54) **Composant d'optique ou de style pour dispositif d'eclairage ou de signalisation pour véhicule automobile**
Optisches oder gestalterisches Bauelement für eine Beleuchtungs- oder Anzeigevorrichtung für Kraftfahrzeuge
Optical or styling component for a lighting or indicator device for a motor vehicle

(43) Date de publication de la demande: 17.09.2003
(73) Titulaire: VALEO VISION, 93012 Bobigny Cédex (FR)
(72) Inventeur: Pinson, Ghislaine, c/o Valeo Vision, 93012 Bobigny Cedex (FR); Duplessy, Régis, c/o Valeo Vision, 93012 Bobigny Cedex (FR)

(56) Documents cités:
- DE-U- 29 908 819
- FR-A- 1 334 217
- FR-A- 2 200 806
- FR-A- 2 796 130
- US-A- 5 575 936
- PATENT ABSTRACTS OF JAPAN vol. 1997, no. 12, 25 décembre 1997 (1997-12-25) -& JP 09 207661 A (HONDA ACCESS CORP;KOITO MFG CO LTD), 12 août 1997 (1997-08-12)

## Description

La présente invention concerne le domaine des dispositifs d'éclairage et de signalisation pour véhicules automobiles.

De nombreux cas peuvent se présenter dans lesquels l'espace disponible n'est pas suffisant pour implanter une fonction de signalisation. C'est le cas par exemple lorsque plusieurs fonctions doivent être regroupées dans un même ensemble de volume réduit, par exemple un boîtier comportant un projecteur de croisement, un projecteur de route, un indicateur de direction, une lampe de ville, et que l'on désire implanter une fonction supplémentaire ou complémentaire.

De la même façon, des cas peuvent se présenter où la place disponible pour implanter une fonction d'éclairage ou de signalisation est limitée, et où cette fonction doit être implantée pour satisfaire à la réglementation en vigueur. C'est par exemple le cas d'un troisième feu de stop qui, en fonction des caractéristiques d'un véhicule donné, ne peut être installé qu'à l'intérieur de l'habitacle du véhicule, à proximité de la lunette arrière, ce troisième feu de stop réduisant la visibilité à travers cette lunette arrière.

D'autre part, les considérations de style prennent de nos jours une importance croissante, et deviennent une préoccupation majeure en matière de conception d'équipements automobiles en général, et de projecteurs ou de feux de signalisation en particulier, les concepteurs recherchant toujours de nouvelles possibilités d'intégration esthétique de ces dispositifs dans le véhicule.

C'est ainsi par exemple que des masques, utilisés dans un premier temps pour dissimuler soit des discontinuités entre différents composants, comme entre le réflecteur et la glace de protection d'un projecteur, soit des parties n'ayant pas de fonction optique, comme le boîtier lui-même, sont utilisés maintenant comme éléments de décoration, en leur donnant des aspects, par exemple une teinte ou un revêtement réfléchissant, ou des configurations, par exemple des reliefs ou des motifs, particuliers pour obtenir un effet esthétique nouveau.

Par contre, les éléments du dispositif d'éclairage ou de signalisation qui participent à l'élaboration du faisceau lumineux, c'est à dire les composants optiques, ne permettent pas de telles libertés de style. En effet, les réglementations en vigueur imposent que les faisceaux lumineux émis par de tels dispositifs respectent des contraintes concernant aussi bien leur étendue géométrique que leurs qualités photométriques, tant en intensité lumineuse qu'en couleur dominante. Il n'est alors possible de donner à ces composants optiques que des teintes ou colorations très légères, de manière à rester sans effet notable sur le faisceau lumineux émis par le dispositif, de sorte que ces teintes ou colorations sont pratiquement imperceptibles.

On connaît par ailleurs des matériaux diffusant la lumière. Par exemple, le document FR-A-2 796 130, décrit un tel matériau pour dispositif d'éclairage intérieur ou de signalisation intérieure ou extérieure pour véhicule automobile, qui comprend une source lumineuse coopérant avec des moyens optiques de diffusion de la lumière comprenant une plaque apte à être traversée par la lumière issue de la source, dont la masse est réalisée en un premier matériau transparent possédant un premier indice de réfraction et dans laquelle sont noyées des inclusions en un second matériau transparent possédant un second indice de réfraction différent du premier.

De même, le document JP-A-09 207661 décrit un dispositif de troisième feu stop central, comportant principalement un guide de lumière à chaque extrémité duquel est disposée une source lumineuse. Le guide de lumière est constitué d'un matériau du même genre que celui du document précédent, de sorte que la lumière circulant dans le guide est réfléchie et diffusée à travers toute la surface extérieure du guide.

On connaît enfin du document FR-A-1 334 217 des feuilles de composition thermoplastique transparente qui diffusent la lumière visible les traversant, ces feuilles contenant une matière diffusante en des points isolés présentant une forme irrégulière ou une configuration parallèle de forme générale allongée, de telle sorte que la composition thermoplastique transparente délimite des trajets de lumière à travers les feuilles.

Tous ces documents décrivent des matériaux dans lesquels les éléments diffusant la lumière sont répartis aléatoirement dans un matériau transparent.

La présente invention se place dans ce contexte et elle a pour but de proposer un dispositif d'éclairage ou de signalisation comprenant un composant, dont l'encombrement soit negligeable ou nul de manière à permettre facilement son implantation dans les espaces de ces dispositifs d'éclairage ou de signalisation où le volume est réduit et où on désire néanmoins disposer d'une fonction d'éclairage, de signalisation ou de style, un tel dispositif d'éclairage devant en outre être simple à fabriquer, tout en permettant d'obtenir d'une part un aspect prédéterminé de projecteur ou de feu de signalisation lorsqu'ils sont éteints, et d'autre part de modifier le faisceau lumineux émis par ces dispositifs lorsque la source lumineuse est allumée pour obtenir une fonction d'éclairage ou de signalisation, le faisceau restant conforme aux réglementations en vigueur, un tel dispositif devant en outre être peu onéreux de manière à ne pas alourdir le coût d'un projecteur ou d'un feu.

La présente invention a donc pour objet un dispositif d'éclairage ou de signalisation de véhicule automobile, comprenant une glace constituée d'un matériau transparent à l'intérieur duquel sont situés des foyers de diffusion de la lumière pour diffuser la lumière émise par une source lumineuse associée au dispositif d'éclairage ou de signalisation, les foyers de diffusion de la lumière étant constitués de discontinuités locales dans le matériau, et étant situés uniquement en des endroits prédéterminés.

Selon la présente invention, les discontinuités locales du matériau transparent sont créées par des modifications irréversibles de la structure de volumes élémentaires du matériau transparent.

Les modifications irréversibles de la structure des volumes élémentaires du matériau transparent sont obtenues par focalisation d'un rayonnement électromagnétique.

Le rayonnement électromagnétique est un rayonnement laser.

Les foyers de diffusion de la lumière diffusent les rayons lumineux issus de la source lumineuse du projecteur et incidents sur le composant ;

Les foyers de diffusion de la lumière diffusent les rayons lumineux issus d'une source lumineuse auxiliaire et se propageant dans le composant par réflexions totales successives.

Dans une autre réalisation, le composant constitue un insert disposé dans un projecteur de véhicule automobile, les foyers de diffusion diffusant les rayons lumineux issus d'une source lumineuse auxiliaire,

Dans encore une autre réalisation, le composant constitue la lentille convergente d'un projecteur dont le réflecteur a une section elliptique.

Dans encore une autre réalisation, le composant constitue un barreau de signalisation, les foyers de diffusion étant répartis selon un motif prédéterminé et diffusant les rayons lumineux émis par au moins une source lumineuse et se propageant dans le barreau par réflexions totales successives. Dans ce cas, le composant peut être partiellement métallisé.

Dans une réalisation supplémentaire, le composant de l'invention constitue un répétiteur lumineux d'une fonction d'éclairage ou de signalisation, et il est associé à une source lumineuse spécifique, dont l'allumage et l'extinction sont commandées simultanément à l'allumage et l'extinction de la source lumineuse de la fonction dont le composant constitue le répétiteur.

Dans une autre réalisation supplémentaire, le composant de l'invention constitue en lui même un dispositif d'éclairage, en étant associé à une source lumineuse spécifique.

Dans toutes ces réalisations,
- les foyers de diffusion ont une taille comprise entre 1 et 35 microns ;
- le matériau transparent est de la matière plastique ;
- le matériau transparent est du verre.

L'invention propose également des projecteurs et des feux de signalisation équipés de composants tels que définis ci-dessus.

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure 1A représente une vue en coupe d'un composant d'optique ou de style selon la présente invention ;
- la Figure 1B représente une vue en coupe du composant de la Figure 1, dans d'autres conditions d'utilisation ;
- la Figure 2 représente une installation pour la réalisation du composant selon l'invention ;
- la Figure 3 représente une vue en coupe d'un projecteur équipé d'un composant selon un premier mode de réalisation de l'invention ;
- la Figure 4 représente une vue en coupe d'un projecteur équipé d'un composant selon un deuxième mode de réalisation de l'invention ;
- la Figure 5 représente une vue en coupe d'un projecteur équipé d'un composant selon un troisième mode de réalisation de l'invention ;
- la Figure 6 représente une vue schématique en coupe verticale d'un projecteur de type elliptique incorporant un composant selon l'invention ;
- la Figure 7 représente une vue schématique en perspective isométrique un dispositif de signalisation incorporant un composant selon l'invention;
- la Figure 8 représente une vue en coupe selon la ligne VIII-VIII de la Figure 7, et
- la Figure 9 représente une variante de la Figure 5.

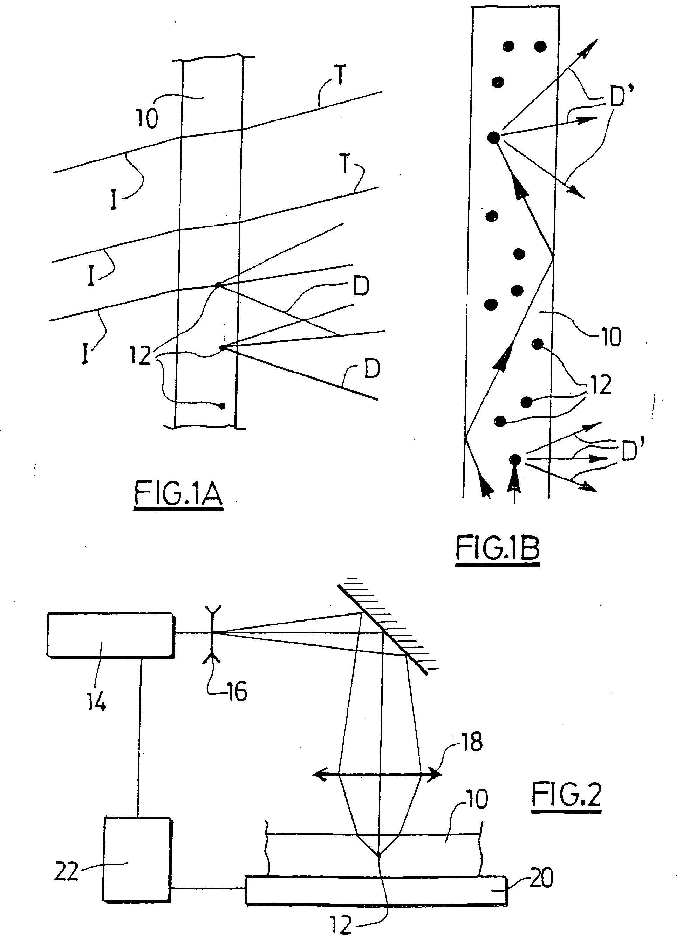

On a représenté sur les Figures 1A et 1B une vue en coupe d'un composant 10 selon la présente invention. Ce composant 10 est constitué d'un matériau transparent, par exemple en verre ou en matière plastique telle que du polyméthylemétacrylate (PMMA) ou du polycarbonate (PC). Le composant 10 comporte des inclusions 12 disposées à l'intérieur de ce composant 10.

De façon connue, un faisceau de rayons lumineux incidents I sur le composant 10 donnera naissance à un faisceau de rayons lumineux transmis T, parallèles aux rayons incidents I si le composant 10 est une lame à faces parallèles, et à des rayons lumineux diffusés D chaque fois qu'un rayon lumineux I rencontre un foyer de diffusion 12. Les rayons diffusés D sont émis dans toutes les directions par les inclusions 12, agissant comme des foyers de diffusion de lumière, comme on l'a représenté sur la Figure 1A.

De façon également connue, si le composant 10 est utilisé comme un guide de lumière, un faisceau lumineux est introduit dans le composant 10 par l'une au moins de ses extrémités, de sorte que les rayons lumineux se propagent dans le composant 10 par réflexions totales successives, jusqu'à ce qu'ils rencontrent un foyer de diffusion 12, par lequel ils forment alors des rayons diffusés dans toutes les directions D' qui peuvent alors émerger du composant 10, comme on l'a représenté sur la Figure 1B.

Conformément à la présente invention, les inclusions 12 sont situées dans le matériau constituant le composant 10 en des endroits parfaitement prédéterminés, et uniquement en ces endroits prédéterminés. Comme on l'a représenté sur la Figure 1A, les inclusions 12 peuvent par exemple être disposées dans un plan parallèle aux faces du composant 10, plus proche de la face de sortie que de la face d'entrée, équidistantes entre elles, et seulement dans la partie inférieure en considérant la Figure 1A. Les inclusions 12 pourront être disposées dans le matériau du composant 10 selon la quantité et la distribution désirées de lumière diffusée, comme on l'a représenté sur la Figure 1B.

Les inclusions 12 pourront être obtenues à l'aide d'une installation telle que représentée sur la Figure 2. On voit sur cette Figure un émetteur de rayonnement électromagnétique 14, par exemple un laser, qui émet un faisceau d'ondes qui sont focalisées, grâce à des composants optiques 16 et 18, à l'intérieur du matériau transparent du composant 10. Ce dernier est monté sur une platine 20, mobile selon les trois directions orthogonales X, Y et Z, les mouvements de la platine 20 étant commandés par une unité de commande 22, qui pilote également l'émetteur 14. De préférence, ce dernier est un laser émettant dans l'infrarouge.

De cette manière, l'énergie contenue dans le faisceau émis par l'émetteur 14 est concentrée dans un volume élémentaire du matériau transparent du composant 10, dont les dimensions sont déterminées par le composant optique de focalisation 18. En fonction de l'énergie concentrée dans ce volume élémentaire, c'est à dire du temps d'exposition du volume élémentaire à cette énergie, de la valeur de cette énergie, et de la longueur d'onde du rayonnement électromagnétique, et en fonction du matériau considéré, il se produit des modifications irréversibles de la structure, atomique, moléculaire et/ou cristalline, du volume élémentaire de matériau transparent ainsi exposé, telles qu'une fusion puis une solidification localisées, accompagnées ou non d'une ionisation localisée, qui perturbent la structure du matériau, et résultent en une discontinuité ou une anisotropie localisée dans ce volume élémentaire, constituant ainsi un foyer de diffusion.

Le foyer de diffusion ainsi créé pourra être différent selon la nature du matériau constituant le composant 10. Par exemple pour du verre ou de la matière plastique comme le PMMA, le foyer de diffusion est d'apparence claire, et pour de la matière plastique comme le polycarbonate, le foyer de diffusion est d'apparence sombre.

Grâce à une telle installation, il est ainsi possible de positionner le point de focalisation du rayonnement issu de l'émetteur 14, et donc la discontinuité et le foyer de diffusion en résultant, en tout endroit prédéterminé à l'intérieur du matériau du composant 10, pour obtenir un composant d'optique ou de style comportant une disposition prédéterminée de foyers de diffusion de la lumière, selon deux ou trois dimensions, et procurant le résultat désiré dans un dispositif d'éclairage ou de signalisation pour véhicule automobile.

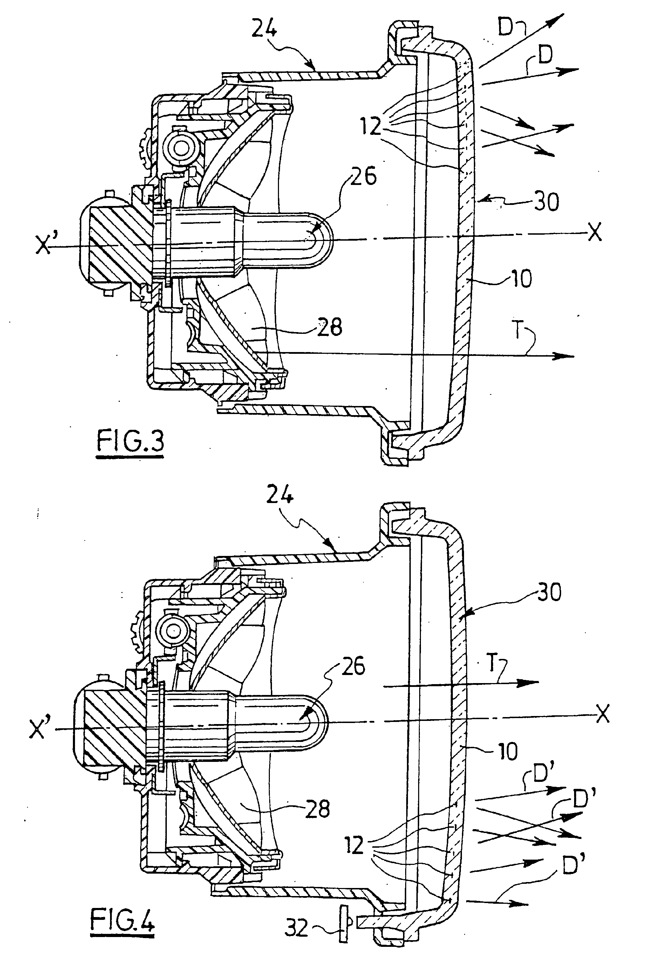

On a représenté sur la Figure 3 un projecteur pour véhicule automobile, comportant de façon classique dans un boîtier 24 une source lumineuse 26 coopérant avec un réflecteur 28 pour former un faisceau d'éclairage de route et/ou de croisement, une glace 30 fermant avec étanchéité le boîtier 24. Avantageusement, le réflecteur 28 est apte à engendrer par lui-même le faisceau lumineux réglementaire, de sorte que la glace 30 peut être lisse ou faiblement déviatrice et n'assurer que le rôle de fermeture étanche du boîtier 24.

Conformément à la présente invention, la glace 30 est constituée d'un composant tel que celui qui vient d'être décrit, et comporte des discontinuités 12 en des endroits prédéterminés en fonction du rôle que l'on désire faire jouer à la lumière diffusée par ces foyers de diffusion 12.

Par exemple, on désire que, lorsque le faisceau émis par le projecteur est un faisceau de croisement, c'est à dire un faisceau avec coupure supérieure pour ne pas éblouir les conducteurs venant en sens inverse, de la lumière soit quand même émise vers le haut pour éclairer par exemple les panneaux indicateurs de direction situés au-dessus de la chaussée sur des portiques. Grâce à l'invention, ceci pourra être réalisé facilement en formant dans le composant 10 constituant la glace 30 des foyers de diffusion 12 dans sa partie supérieure (en considérant la Figure 3).

De cette manière, le faisceau de croisement engendré par le projecteur est pratiquement inchangé, et se propage sensiblement dans la direction de l'axe optique X'-X de ce dernier. Cependant, les rayons lumineux réfléchis par le réflecteur 28 et incidents sur les foyers de diffusion 12 sont diffusés dans toutes les directions, et en particulier vers le haut, pour fournir la lumière désirée dans cet endroit de l'espace. Bien entendu, le nombre et la concentration des foyers de diffusion 12 seront choisis pour que le faisceau lumineux de rayons transmis T soit encore conforme à la réglementation, c'est à dire qu'il ne soit pas éblouissant.

On peut également désirer ajouter une fonction de signalisation à un projecteur qui en est dépourvu, par exemple une fonction lampe de ville ou indicateur de changement de direction. L'invention permet également d'intégrer cette modification très facilement. Comme on le voit sur le deuxième mode de réalisation représenté sur la Figure 4, le composant 10 constituant la glace 30 du projecteur est formé avec des foyers de diffusion 12 dans une partie, par exemple inférieure (en considérant la Figure 4) de la glace 30. De plus, une source lumineuse auxiliaire 32 est associée à la glace 30, de manière à ce que le flux lumineux émis par la source 32 pénètre dans la glace 30 et s'y propage par réflexions internes successives, à la manière d'un guide de lumière. La source lumineuse auxiliaire 32 sera avantageusement constituée d'une diode électroluminescente ou d'une rangée de diodes électroluminescentes, placées au voisinage d'au moins un de ses bords.

De cette manière, lorsque la source lumineuse auxiliaire 32 est allumée, les rayons lumineux émis par celle-ci pénètrent dans la glace 30 et s'y propagent jusqu'à ce qu'ils rencontrent un foyer de diffusion 12. Ils sont alors diffusés dans toutes les directions, et remplissent la fonction supplémentaire désirée, pour peu que le nombre et la concentration des foyers de diffusion soit calculée pour que le flux lumineux total des rayons diffusés D' soit conforme à la réglementation concernant cette fonction. Pour une fonction d'indication de direction, la source lumineuse auxiliaire 32 pourra par exemple émettre un faisceau de lumière de couleur ambre, de manière à ce que les foyers de diffusion ne diffusent cette couleur que lorsque la source lumineuse auxiliaire 32 est allumée. Pour une fonction lampe de ville, la source lumineuse auxiliaire 32 pourra émettre un faisceau de lumière blanche. Selon ce mode de réalisation, les foyers de diffusion 12 seront disposés de manière à ne pas perturber le faisceau lumineux de rayons transmis T engendré lorsque la source lumineuse 26 est allumée.

Selon les deux modes de réalisation qui viennent d'être décrits, on pourra de plus prévoir que les foyers de diffusion 12 soient disposés de manière à avoir une configuration donnée, pour former un motif esthétique particulier tout en conservant leur fonction optique.

Un avantage important présenté par l'invention réside dans le fait que la fonction de signalisation peut être ajoutée à un composant déjà existant, et donc sans changer sa forme. Il en résulte que tout l'outillage nécessaire à sa production et à son installation dans le projecteur peut être conservé. Seule une étape supplémentaire de formation des foyers de diffusion peut être mise en oeuvre si nécessaire, cette étape n'ayant qu'une influence très modérée sur le coût final du composant.

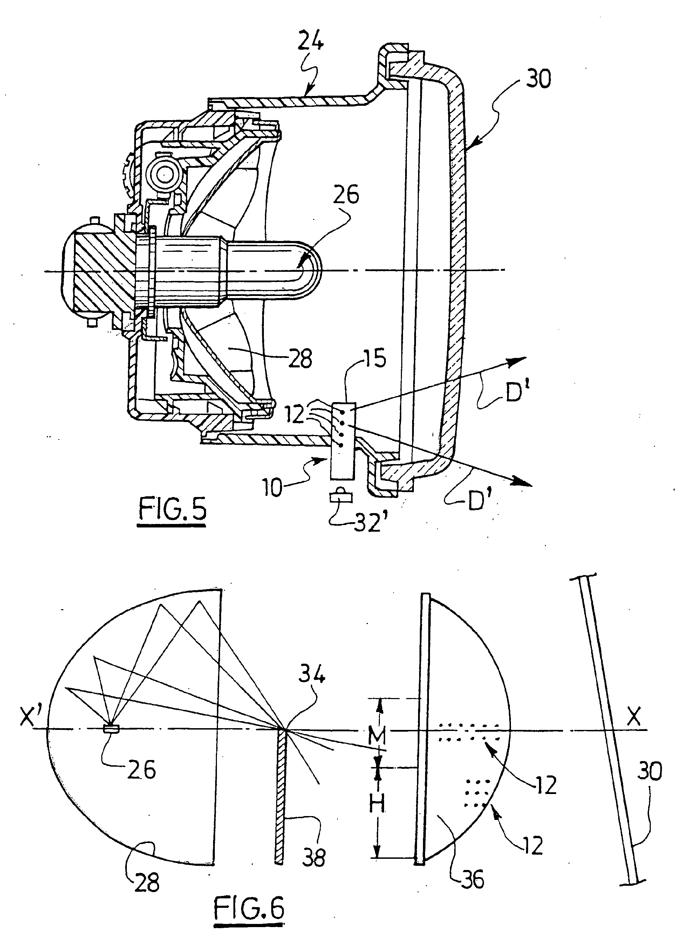

On peut également ajouter une fonction lampe de ville ou indicateur de changement de direction à un projecteur selon le troisième mode de réalisation représenté sur la Figure 5, où le composant 10 forme un insert 15 disposé dans le projecteur, en étant disjoint de la glace de fermeture 30, et dans un endroit de ce projecteur où il n'interfère pas avec le faisceau lumineux engendré par le réflecteur 28, une source lumineuse auxiliaire 32' étant associée à l'insert 15. Ainsi, lorsque la source lumineuse auxiliaire 32' est allumée, les rayons lumineux émis par celle-ci pénètrent dans l'insert 15 et s'y propagent jusqu'à ce qu'ils rencontrent un foyer de diffusion 12. Ils sont alors diffusés dans toutes les directions, et une partie des rayons diffusés D' est dirigée vers la glace 30 et vers l'extérieur du projecteur, où ils remplissent la fonction supplémentaire désirée si le nombre et la concentration des foyers de diffusion est calculée pour que le flux lumineux total des rayons diffusés D' soit conforme à la réglementation concernant cette fonction. Comme dans le mode de réalisation précédent, une fonction d'indication de direction sera obtenue à l'aide d'une source lumineuse auxiliaire 32' de couleur ambre, tandis qu'une fonction lampe de ville sera obtenue avec une source lumineuse auxiliaire 32' émettant un faisceau de lumière blanche.

Selon ce troisième mode de réalisation, la source lumineuse auxiliaire 32' pourra être constituée d'une source lumineuse ayant déjà une fonction par elle-même. Elle pourra par exemple être la source lumineuse de l'indicateur de changement de direction, situé en dessous du projecteur de la Figure 5. Le composant 10 remplit alors la fonction de répétiteur.

Selon ce troisième mode de réalisation également, on pourra de plus prévoir que les foyers de diffusion 12 soient disposés de manière à avoir une configuration donnée, pour former un motif esthétique particulier tout en conservant leur fonction optique. On pourra également prévoir de métalliser la face de l'insert 15 opposée à celle qui est tournée vers la glace 30, de manière à privilégier la direction d'émission des rayons diffusés D' vers la glace 30 et vers l'extérieur du projecteur.

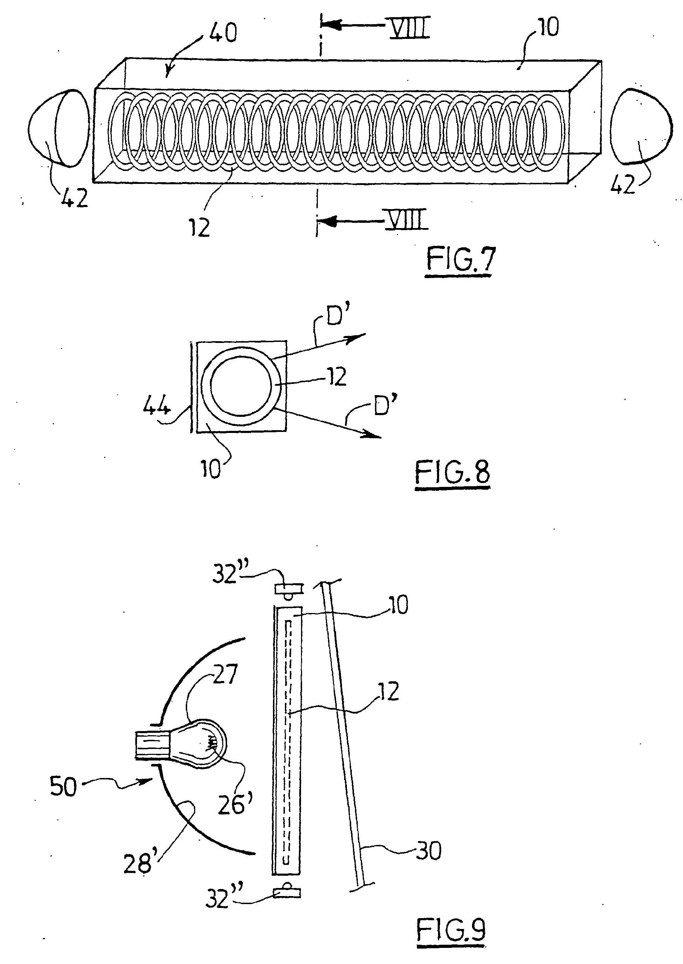

On a représenté sur la Figure 9 une variante de ce troisième mode de réalisation. On voit sur cette Figure un dispositif d'éclairage ou de signalisation 50, comportant une source lumineuse 26' telle que le filament d'une lampe à incandescence dans l'exemple représenté, coopérant avec un miroir 28' pour former un faisceau d'éclairage ou de signalisation, une glace 30 fermant avec étanchéité le boîtier (non représenté sur la Figure 9) contenant le miroir 28'. Un composant 10 selon la présente invention est disposé derrière la glace 30 de manière à être traversé par le faisceau d'éclairage ou de signalisation. Une ou plusieurs sources lumineuses auxiliaires 32" sont associées au composant 10 de manière à ce que ce dernier se comporte comme un guide de lumière, comme sur la Figure 1B.

Lorsque la ou les sources lumineuses 32" sont allumées, les rayons lumineux engendrés par ces sources lumineuses subissent des réflexions multiples sur les faces en regard du composant 10, jusqu'à ce qu'ils rencontrent des foyers de diffusion 12. Ils sont alors diffusés dans toutes les directions, et en particulier vers l'avant et vers l'arrière, où ils sont alors réfléchis par le miroir 28' vers l'avant.

Lorsque la source lumineuse 26' est allumée, les rayons lumineux traversent le composant 10, comme on l'a représenté sur la Figure 1A, certains de ces rayons étant diffusés par les foyers de diffusion 12.

De cette manière, lorsque seules les sources lumineuses 32" sont allumées, un flux lumineux sera émis au travers de la glace 30, la couleur de ce flux étant fixée par celle des sources 20. Lorsque seule la source lumineuse 26' est allumée, le flux lumineux réfléchi par le miroir 28' sera également émis au travers du composant 10 et de la glace 30, la couleur de ce flux étant fixée par celle du bulbe 27 de la lampe ou d'un écran intermédiaire (non représenté). Il en résulte que les fonctions remplies par les sources lumineuses 26' et 32" pourront être parfaitement différenciées par leur couleur ou leur intensité lumineuse. De préférence, l'intensité lumineuse émise par le filament 26' sera supérieure à celle de la ou des sources lumineuses 32", de façon à ce que, lorsque les sources lumineuses 26' et 32" sont allumées simultanément, le flux lumineux total réponde aux exigences photométriques réglementaires pour la fonction remplie par la source lumineuse 26'.

Le composant 10 pourra par exemple remplir la fonction de lanterne arrière de véhicule, et le filament 26' être celui d'un feu de stop, les photométries et colorimétries de ces deux fonctions étant chacune conforme à la réglementation. Grâce à l'invention, il est ainsi possible que la même surface de la glace 30 émette des faisceaux lumineux différents remplissant des fonctions différentes. L'ensemble dans lequel sont logés le dispositif d'éclairage ou de signalisation 50 et le composant 10 peut donc être d'un encombrement très faible.

L'invention s'applique également à des projecteurs de type elliptique, tels que celui qui est représenté schématiquement sur la Figure 6. Un tel projecteur comprend typiquement une source lumineuse 26 placée au voisinage immédiat d'un premier foyer d'un réflecteur 28 de section elliptique, de sorte que les rayons émis par la source 26 sont concentrés au deuxième foyer 34 du miroir 28, confondu avec le foyer objet d'une lentille convergente plan-convexe 36, un cache 38 ayant un bord horizontal perpendiculaire à l'axe optique X'-X et définissant la coupure du faisceau de croisement dans l'axe X'-X. Cet ensemble est contenu dans un boîtier (non représenté) fermé par une glace 30.

La glace 30 pourra être constituée par le composant 10 lui-même, les foyers de diffusion 12 diffusant la lumière de la source lumineuse 26 comme dans le premier mode de réalisation décrit plus haut, ou celle d'une source auxiliaire 32, comme dans le deuxième mode de réalisation décrit plus haut. Le composant 10 pourra également constituer un insert 15 disposé dans le projecteur elliptique, comme dans le troisième mode de réalisation décrit plus haut

La lentille plan-convexe 36 pourra elle aussi être constituée par le composant 10 et comprendre des foyers de diffusion 12 en des endroits prédéterminés, et en ces endroits seulement.

Les foyers de diffusion 12 pourront par exemple être disposés dans une région H de la lentille 36 de manière à ce que de la lumière diffusée soit émise vers le haut pour éclairer par exemple les panneaux indicateurs de direction situés au-dessus de la chaussée sur des portiques. Les foyers de diffusion 12 seront alors avantageusement formés dans une zone appropriée de la lentille, par exemple une région H dans sa partie inférieure (sur la Figure 6).

Les foyers de diffusion 12 pourront également être disposés dans une région M de la partie médiane de la lentille 36, dans une zone horizontale voisine de l'axe optique X'-X, de manière à rendre floue la coupure du faisceau émis par le projecteur elliptique et ainsi atténuer le passage entre les zones éclairées et non éclairées de la route en avant du véhicule. Bien entendu, la lentille 36 pourra comprendre des foyers de diffusion à la fois dans les régions H et M.

L'invention s'applique également à la signalisation, comme on l'a représenté sur les Figures 7 et 8. On voit sur ces Figures un barreau de signalisation 40, en verre ou en matière plastique, constitué par un composant 10 selon l'invention, dans lequel des foyers de diffusion 12 ont été répartis selon un motif régulier particulier. Une source lumineuse 42, deux dans l'exemple représenté sur la Figure 7, est disposée à une extrémité du barreau, de manière à ce que le barreau 40 se comporte comme un guide de lumière.

Les rayons lumineux issus de la ou des sources lumineuses 42 pénètrent dans le barreau 40 et s'y propagent par réflexions totales successives jusqu'à ce qu'ils soient incidents sur un foyer de diffusion 12, ainsi qu'on l'a expliqué en référence à la Figure 1. Des rayons diffusés D' sont alors émis qui peuvent émerger du barreau 40. En choisissant convenablement la disposition et la concentration des foyers de diffusion 12, de même que l'intensité et la couleur du flux lumineux émis par la ou les sources lumineuses 42, on pourra obtenir comme résultat que l'ensemble des rayons diffusés D' constituent un flux lumineux suffisant pour remplir à lui seul une fonction de signalisation, comme par exemple un troisième feu de stop surélevé, un clignotant indicateur de changement de direction, une lanterne arrière ou encore un rappel latéral.

Un avantage présenté par ce mode de réalisation réside dans le fait que la fonction de signalisation ainsi réalisée ne présente comme épaisseur que celle du barreau 40, qui peut être très faible.

Un autre avantage réside dans le fait que la fonction de signalisation ainsi réalisée peut présenter un aspect, lorsque les sources lumineuses 42 sont éteintes, de teinte neutre, seul le motif constitué par l'ensemble des foyers de diffusion 12 étant visible, et un autre aspect lorsque les sources lumineuses 42 sont allumées, la couleur étant totalement différente de celle de l'aspect présenté lorsque les sources lumineuses 42 sont éteintes, selon la fonction de signalisation assurée par le barreau 40.

De manière à minimiser les pertes de lumière et à privilégier une direction préférentielle pour les rayons diffusés D' émergeant du barreau 40, on pourra avantageusement prévoir une métallisation 44 sur au moins une des faces du barreau 40, lorsque ce dernier est de forme parallélépipédique.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que le composant selon la présente invention pourra être utilisé comme répétiteur lumineux d'une fonction d'éclairage ou de signalisation, en étant par exemple disposé sur un élément de la carrosserie du véhicule, tel qu'une aile de cette carrosserie ou la partie avant d'un rétroviseur extérieur de ce véhicule. Dans ce cas, il pourra être associé à une source lumineuse spécifique, dont l'allumage et l'extinction seront commandées simultanément à l'allumage et l'extinction de la source lumineuse de la fonction dont le composant constitue le répétiteur. Il pourra encore constituer en lui même un dispositif d'éclairage, par exemple un plafonnier assurant l'éclairage intérieur de l'habitacle du véhicule, ou encore un dispositif pour l'éclairage intérieur de la boite à gants ou du coffre à bagages, en étant associé à une source lumineuse spécifique.

## Revendications

1. Dispositif d'éclairage ou de signalisation de véhicule automobile, comprenant une glace (30) constituée d'un matériau transparent à l'intérieur duquel sont situés des foyers de diffusion de la lumière (12) pour diffuser la lumière émise par une source lumineuse (26, 32, 32', 32", 42) associée au dispositif d'éclairage ou de signalisation, les foyers de diffusion de la lumière étant constitués de discontinuités locales (12) dans le matériau, et étant situés uniquement en des endroits prédéterminés, **caractérisé en ce que** les discontinuités locales (12) du matériau transparent sont créées par des modifications irréversibles de la structure de volumes élémentaires du matériau transparent.

2. Dispositif d'éclairage ou de signalisation selon la revendication 1, selon **caractérisé en ce que** les modifications rréversibles de la structure des volumes élémentaires du matériau transparent sont obtenues par focalisation d'un rayonnement électromagnétique.

3. Dispositif d'éclairage ou de signalisation selon la revendication 2, **caractérisé en ce que** le rayonnement électromagnétique est un rayonnement laser.

4. Dispositif d'éclairage ou de signalisation selon l'une des revendications 1 à 3, **caractérisé en ce qu'**il constitue une glace (30) de projecteur de véhicule automobile.

5. Dispositif d'éclairage ou de signalisation selon la revendication 4, **caractérisé en ce que** les foyers de diffusion de la lumière (12) diffusent les rayons lumineux issus de la source lumineuse (26) du projecteur et incidents sur le composant (10).

6. Dispositif d'éclairage ou de signalisation selon la revendication 4, **caractérisé en ce que** les foyers de diffusion de la lumière (12) diffusent les rayons lumineux issus d'une source lumineuse auxiliaire (32) et se propageant dans le composant (10) par réflexions totales successives.

7. Dispositif d'éclairage ou de signalisation selon l'une des revendications 1 à 3, **caractérisé en ce qu'**il constitue un insert (15) disposé dans un projecteur de véhicule automobile, les foyers de diffusion (12) diffusant les rayons lumineux issus d'une source lumineuse auxiliaire (32'),

8. Dispositif d'éclairage ou de signalisation selon l'une des revendications 1 à 3, **caractérisé en ce qu'**il constitue la lentille convergente (36) d'un projecteur dont le réflecteur (28) a une section elliptique.

9. Dispositif d'éclairage ou de signalisation selon l'une des revendications 1 à 3, **caractérisé en ce qu'**il constitue un barreau de signalisation (40), les foyers de diffusion (12) étant répartis selon un motif prédéterminé et diffusant les rayons lumineux émis par au moins une source lumineuse (42) et se propageant dans le barreau (40) par réflexions totales successives.

10. Dispositif d'éclairage ou de signalisation selon la revendication 9, **caractérisé en ce qu'**il est partiellement métallisé (44).

11. Dispositif d'éclairage ou de signalisation selon l'une quelconque des revendications 1 à 10, **caractérisé en ce que** les foyers de diffusion ont une taille comprise entre 1 et 35 microns.

12. Dispositif d'éclairage ou de signalisation selon l'une quelconque des revendications 1 à 11, **caractérisé en ce que** le matériau transparent est de la matière plastique.

13. Dispositif d'éclairage ou de signalisation selon l'une quelconque des revendications 1 à 11, **caractérisé en ce que** le matériau transparent est du verre.

14. Projecteur de véhicule automobile, **caractérisé en ce qu'**il incorpore, à titre de glace (30), un composant (10) selon l'une des revendications 1 à 6 et 11 à 13.

15. Projecteur de véhicule automobile, **caractérisé en ce qu'**il incorpore, à titre d'insert (15), un composant selon l'une des revendications 7 et 11 à 13.

16. Projecteur de véhicule automobile, **caractérisé en ce qu'**il incorpore, à titre de lentille convergente (36), un composant selon l'une des revendications 8 et 11 à 13.

17. Feu de signalisation pour véhicule automobile, **caractérisé en ce qu'**il incorpore un composant selon l'une des revendications 1 à 3.

18. Dispositif d'éclairage ou de signalisation selon l'une des revendications 1 à 3, **caractérisé en ce qu'**il constitue un répétiteur lumineux d'une fonction d'éclairage ou de signalisation, et **en ce qu'**il est associé à une source lumineuse spécifique, dont l'allumage et l'extinction sont commandées simultanément à l'allumage et l'extinction de la source lumineuse de la fonction dont le composant constitue le répétiteur.

19. Dispositif d'éclairage ou de signalisation selon l'une des revendications 1 à 3, **caractérisé en ce qu'**il constitue en lui même un dispositif d'éclairage, en étant associé à une source lumineuse spécifique.

## Claims

1. Lighting or indicator device for a motor vehicle, comprising glazing (30) consisting of a transparent material within which light-diffusion loci (12) are situated, in order to diffuse the light emitted by a light source (26, 32, 32 ', 32 ", 42) associated with the lighting or indicator device, the light-diffusion loci consisting of local discontinuities (12) in the material and situated only at predetermined locations, **characterized in that** the local discontinuities (12) of the transparent material are created by irreversible modifications of the structure of individual volumes of the transparent material.

2. Lighting or indicator device according to the claim 1, **characterized in that** the individual volumes of the transparent material are obtained by focusing of electromagnetic radiation.

3. Lighting or indicator device according to claim 2, **characterized in that** the electromagnetic radiation is laser radiation.

4. Lighting or indicator device according to anyone of claims 1 to 3, **characterized in that** it comprises a motor vehicle headlamp glazing (30).

5. Lighting or indicator device according to claim 4, **characterized in that** the light-diffusion foci (12) diffuse the light rays originating from the light source (26) of the headlamp and incident on the component (10).

6. Lighting or indicator device according to claim 4, **characterized in that** the light-diffusion foci (12) diffuse the light rays originating from an auxiliary light source (32) and propagating in the component (10) by successive total reflections.

7. Lighting or indicator device according to anyone of claims 1 to 3, **characterized in that** it comprises an insert (15) disposed in a motor vehicle headlamp, the diffusion foci (12) diffusing the light rays originating from an auxiliary light source (32 ').

8. Lighting or indicator device according to anyone of claims 1 to 3, **characterized in that** it comprises the convergent lens (36) of a headlamp, the reflector (28) of which has an elliptical section.

9. Lighting or indicator device according to anyone of claims 1 to 3, **characterized in that** it comprises an indicator strip light (40), the diffusion foci (12) being distributed according to a pre-determined pattern and diffusing the light rays emitted by at least one light source (42) and propagating in the strip light (40) by successive total reflections.

10. Lighting or indicator device according to claim 9, **characterized in that** it is partially metallised (44).

11. Lighting or indicator device according to anyone of claims 1 to 10, **characterized in that** the diffusion foci have a size of between 1 and 35 microns.

12. Lighting or indicator device according to anyone of claims 1 to 11, **characterized in that** the transparent material is plastic.

13. Lighting or indicator device according to anyone of claims 1 to 11, **characterized in that** the transparent material is glass.

14. Motor vehicle headlamp, **characterized in that** it incorporates, as glazing (30), a component (10) as claimed in claims 1 to 6 and 11 to 13.

15. Motor vehicle headlamp, **characterized in that** it incorporates, as insert (15), a component as claimed in claims 7 and 11 to 13.

16. Motor vehicle headlamp, **characterized in that** it incorporates, as convergent lens (36), a component as claimed in claims 8 and 11 to 13.

17. Motor vehicle indicator light, **characterized in that** it incorporates a component as claimed in claims 1 to 3.

18. Lighting or indicator device according to anyone of claims 1 to 3, **characterized in that** it comprises a repeater light, having a lighting or indicator function, and **in that** it is associated with a specific light source, the turning on and the turning off of which are controlled simultaneously with the turning on and turning off of the light source having the function of which the device constitutes the repeater.

19. Lighting or indicator device according to anyone of claims 1 to 3, **characterized in that** it itself constitutes a lighting device and is associated with a specific light source.

## Patentansprüche

1. Beleuchtungs- oder Signalgebungsvorrichtung für Kraftfahrzeuge mit einer Scheibe (30), die aus einem lichtdurchlässigen Material gebildet ist, in dem sich innen Lichtstreuungspunkte (12) befinden, um das von einer der Beleuchtungs- oder Signalgebungsvorrichtung zugeordneten Lichtquelle (26, 32, 32', 32", 42) ausgesandte Licht zu streuen, wobei die Lichtstreuungspunkte von lokalen Diskontinuitäten (12) im Material gebildet und ausschließlich an vorbestimmten Stellen angeordnet sind, **dadurch gekennzeichnet, dass** die lokalen Diskontinuitäten (12) des lichtdurchlässigen Materials durch irreversible Veränderungen der Struktur der Elementarvolumina des lichtdurchlässigen Materials gebildet sind.

2. Beleuchtungs- oder Signalgebungsvorrichtung nach Anspruch 1,
**dadurch gekennzeichnet, dass** die irreversiblen Veränderungen der Struktur der Elementarvolumina des lichtdurchlässigen Materials durch Fokussierung einer elektromagnetischen Strahlung erzielt werden.

3. Beleuchtungs- oder Signalgebungsvorrichtung nach Anspruch 2,
**dadurch gekennzeichnet, dass** die elektromagnetische Strahlung eine Laserstrahlung ist.

4. Beleuchtungs- oder Signalgebungsvorrichtung nach einem der Ansprüche 1 bis 3,
**dadurch gekennzeichnet, dass** sie eine Scheibe (30) eines Kraftfahrzeugscheinwerfers bildet.

5. Beleuchtungs- oder Signalgebungsvorrichtung nach Anspruch 4,
**dadurch gekennzeichnet, dass** die Lichtstreuungspunkte (12) die von der Lichtquelle (26) des Scheinwerfers abgegebenen und auf das Bauteil (10) treffenden Lichtstrahlen streuen.

6. Beleuchtungs- oder Signalgebungsvorrichtung nach Anspruch 4,
**dadurch gekennzeichnet, dass** die Lichtstreuungspunkte (12) die von einer zusätzlichen Lichtquelle (32) abgegebenen und sich in dem Bauteil (10) durch aufeinanderfolgende Totalreflexion ausbreitenden Lichtstrahlen streuen.

7. Beleuchtungs- oder Signalgebungsvorrichtung nach einem der Ansprüche 1 bis 3,
**dadurch gekennzeichnet, dass** sie einen in einem Kraftfahrzeugscheinwerfer angeordneten Einsatz (15) bildet, wobei die Streuungspunkte (12) die von einer zusätzlichen Lichtquelle (32') abgegebenen Lichtstrahlen streuen.

8. Beleuchtungs- oder Signalgebungsvorrichtung nach einem der Ansprüche 1 bis 3,
**dadurch gekennzeichnet, dass** sie die Sammellinse (36) eines Scheinwerfers bildet, dessen Reflektor (28) einen elliptischen Querschnitt hat.

9. Beleuchtungs- oder Signalgebungsvorrichtung nach einem der Ansprüche 1 bis 3,
**dadurch gekennzeichnet, dass** sie eine Signalgebungsleiste (40) bildet, wobei die Streuungspunkte (12) nach einem vorbestimmten Muster verteilt sind und die von wenigstens einer Lichtquelle (42) ausgesandten und sich in der Leiste (40) durch aufeinanderfolgende Totalreflexionen ausbreitenden Lichtstrahlen streuen.

10. Beleuchtungs- oder Signalgebungsvorrichtung nach Anspruch 9,
**dadurch gekennzeichnet, dass** sie teilweise metallisiert ist (44).

11. Beleuchtungs- oder Signalgebungsvorrichtung nach einem der Ansprüche 1 bis 10,
**dadurch gekennzeichnet, dass** die Streuungspunkte eine Größe von 1 bis 35 p haben.

12. Beleuchtungs- oder Signalgebungsvorrichtung nach einem der Ansprüche 1 bis 11,
**dadurch gekennzeichnet, dass** das lichtdurchlässige Material aus Kunststoff besteht.

13. Beleuchtungs- oder Signalgebungsvorrichtung nach einem der Ansprüche 1 bis 11,
**dadurch gekennzeichnet, dass** das lichtdurchlässige Material Glas ist.

14. Kraftfahrzeugscheinwerfer,
**dadurch gekennzeichnet, dass** er als Scheibe (30) ein Bauteil (10) nach einem der Ansprüche 1 bis 6 und 11 bis 13 umfasst.

15. Kraftfahrzeugscheinwerfer, **dadurch gekennzeichnet, dass** er als Einsatz (15) ein Bauteil (10) nach einem der Ansprüche 7 und 11 bis 13 umfasst.

16. Kraftfahrzeugscheinwerfer,
**dadurch gekennzeichnet, dass** er als Sammellinse (36) ein Bauteil nach einem der Ansprüche 8 und 11 bis 13 umfasst.

17. Signalleuchte für Kraftfahrzeuge,
**dadurch gekennzeichnet, dass** sie ein Bauteil nach einem der Ansprüche 1 bis 3 umfasst.

18. Beleuchtungs- oder Signalgebungsvorrichtung nach einem der Ansprüche 1 bis 3,
**dadurch gekennzeichnet, dass** sie einen Lichtwiederholer einer Beleuchtungs- oder Signalgebungsfunktion bildet, und dass sie einer speziellen Lichtquelle zugeordnet ist, deren Ein- und Ausschalten gleichzeitig mit dem Ein- und Ausschalten der Lichtquelle der Lichtfunktion gesteuert wird, von der die Vorrichtung den Lichtwiederholer bildet.

19. Beleuchtungs- oder Signalgebungsvorrichtung nach einem der Ansprüche 1 bis 3,
**dadurch gekennzeichnet, dass** sie selbst eine Beleuchtungsvorrichtung bildet, indem sie einer speziellen Lichtquelle zugeordnet ist.
